# EUROPEAN PATENT SPECIFICATION

(11) **EP 3 101 060 B1**
(45) Date of publication and mention of the grant of the patent: **27.12.2017**
(21) Application number: 15170494.7
(22) Date of filing: 03.06.2015
(51) Int. Cl.: C08J 5/18, C08L 23/06

(54) **MACHINE DIRECTION ORIENTED FILM WITH BALANCED PROPERTIES AT LOW STRETCH RATIOS**
IN MASCHINENRICHTUNG AUSGERICHTETER FILM MIT AUSGEGLICHENEN EIGENSCHAFTEN BEI NIEDRIGEN STRECKVERHÄLTNISSEN
FILM ORIENTÉ DANS LE SENS D'UNE MACHINE AVEC DES PROPRIÉTÉS ÉQUILIBRÉES À FAIBLE TAUX D'ÉTIREMENT

(43) Date of publication of application: 07.12.2016
(73) Proprietor: Borealis AG, 1220 Vienna (AT)
(72) Inventor: Niedersüß, Peter, 4312 Ried/Riedmark (AT); Gensous, Audrey, 40100 DAX (FR); De Wever, Willem, 3500 Hasselt (BE); Mandard, Barbara, 1460 Ittre (BE)
(74) Representative: Campbell, Neil Boyd

(56) References cited:
- EP-A1- 1 941 998
- WO-A1-2006/037603

## Description

This invention is related to a film comprising a blend of a special multimodal linear low density polyethylene and a tubular or autoclave low density polyethylene that has been uniaxially stretched in the machine direction (MDO - Machine Direction Orientation) with a stretch ratio below 1:4 and its use in packaging applications.

### Background of the Invention

One of the main uses of polyethylene (like HDPE, MDPE, LLDPE, mLLDPE, ULDPE, VLDPE, LDPE and ethylene based plastomers) or their blends is in film applications, such as grocery sacks, institutional and consumer can liners, merchandise bags, shipping sacks, food packaging films, multi-wall bag liners, produce bags, deli wraps, stretch wraps, and shrink wraps, etc..
The key physical parameters of polyethylene film include tear resistance, impact strength (i.e. dart drop impact, DDI), tensile strength, stiffness and clarity. Tear resistance is measured in machine direction (MD) and transverse direction (TD) and should be on a high level and simultaneously be quite similar in both directions, thus being balanced.
Film stiffness can be measured by tensile modulus. Modulus is the resistance of the film to deformation under stress.
LLDPE film has higher impact strength than MDPE, while HDPE has higher stiffness and tensile strength. When LLDPE producers attempt to increase the density (thereby increasing the modulus of the film), they often encounter losses in impact strength and MD tear resistance. Historically, blending LLDPE and HDPE has not achieved "breakthrough" success. The blends often give films that have improved stiffness and tensile properties, but the impact and tear properties are usually sacrificed. There are no straightforward methods or single resins that have the combined properties of both.

It is also known that to make polyethylene films having acceptable tensile strength for use in packaging, the films can be uniaxially stretched. At the same time, however, other mechanical properties, such as tear resistance in MD are typically compromised.

There were several attempts to solve the above discussed problems.

For Example EP 1 470 185 B1 suggests to use a blend comprising a high molecular weight, medium density polyethylene (HMW MDPE) and a linear low density polyethylene (LLDPE), converting the blend into a film, and orienting the film uniaxially in the machine direction. It is stated that the MD tear and dart impact decreases with lower stretch ratios.

EP 1 941 999 B1 describes a uniaxially oriented film with at least two layers, which comprises a certain combination of linear low density polyethylenes (LLDPEs) and a polymer component, preferably an ethylene copolymer, having a DSC melting temperature Tm of 100 °C or less which provides advantageous mechanical properties, namely at least an excellent impact resistance at film thicknesses considerably lower than the film thicknesses used in the prior art for such applications.
Preferred films of EP 1 941 999 B1 are stretched at a stretch ratio of at least 1:4, more preferably between 1:5 and 1:8. In the Examples a stretch ratio around 1:6 is used, which is a common used ratio in the packaging industry.

EP 2 653 392 A1 deals with a collation shrink film comprising a multimodal linear low density polyethylene that has been uniaxially stretched in the machine direction, preferably in a draw ratio of at least 1:4, more preferably between 1:5 and 1:8.
In a preferred embodiment the films of EP 2 653 392 A1 are free of LDPE. It is believed that the presence of LDPE in the films of the invention might impart poor stretch and poor mechanical properties to the film. Moreover, LDPE does not assist the shrinkage properties of the film. In the Examples a stretch ratio around 1:6 is used, which is a common used ratio in the packaging industry.

So in general stretch ratios of 1:4 or above are used today to produce MDO films based on polyethylene.
Lower stretch ratios, e.g. a stretch ratio below 1:4 typically do not result in the desired increase in properties, especially films based on bimodal linear low density polyethylenes (LLDPEs), which are nowadays preferred materials for MD orientation, show a very inhomogeneous surface and film structure. Therefore very thick primary films have to be produced if a final thickness of around 40µm is needed. This requires more material and a special setup of the blown film line.

Thus there remains a continuous need for alternative films suitable for being used in the packaging field, with an appropriate balance of mechanical properties depending on the desired end application area. There is particularly a need for further materials which enable the production of films with high stiffness (i.e. high tensile modulus), excellent optical properties and balanced tear resistance in machine and transverse direction even at lower stretch ratios.

The present inventors have now found that a uniaxially oriented film which comprises a certain combination of specific linear low density polyethylenes (LLDPEs) and a tubular or autoclave low density polyethylene (LDPE) provides advantageous mechanical properties, namely at least an high stiffness (i.e. high tensile modulus), excellent optical properties and balanced tear resistance in machine and transverse direction, although being produced with a stretch ratio below 1:4.

Thus the present invention provides MDO-films, prepared with a stretch ratio below 1:4, with similar or even improved mechanical and optical properties compared to prior art films prepared with higher stretch ratios, like 1:6, for a wide variety of packaging applications.

It is a key feature of this invention that the stretch ratio required to achieve similar or even improved mechanical and optical properties compared to prior art films is much lower than is conventionally used in a MDO.

### Summary of Invention

Therefore the present invention is related to a film comprising a blend of
a) 5 to 60 wt% of a multimodal linear low density polyethylene comprising ethylene and at least one C4-20 alpha olefin comonomer and having a density of 900 to 950 kg/m³ and
b) 40 to 95 wt% of a tubular or autoclave low density polyethylene having a density of 905 to 940 kg/m³,
the film being uniaxially stretched in the machine direction with a stretch ratio below 1:4.

The present invention is furthermore related to such a film as defined above having a tensile modulus in machine direction measured according to ISO 527-3 on films with a thickness of 40µm of at least 400 MPa and a difference of the relative tear resistance in machine direction and in transverse direction of not more than 180 N/mm.

In a further aspect the present invention is related to the use of the above defined film comprising a blend of a multimodal linear low density polyethylene (LLDPE) and a tubular or autoclave low density polyethylene (LDPE), as defined above, said film being a stretched film which is uniaxially oriented in the machine direction (MD) with a stretch ratio below 1:4 in packaging applications.
The film being especially suitable for use in grocery sacks, institutional and consumer can liners, merchandise bags, shipping sacks, food packaging films, multi-wall bag liners, produce bags, shrink films, label films, tissue overwrap, deli wraps and shrink wraps.

### Detailed description of Invention

The film according to the present invention comprises a blend of a) a multimodal linear low density polyethylene (LLDPE) and b) a tubular or autoclave low density polyethylene (LDPE).

### Ad multimodal linear low density polyethylene (LLDPE)

The LLDPE of use in this invention is multimodal. The term "multimodal" means multimodal with respect to molecular weight distribution and includes therefore also bimodal polymers.

Usually, a LLDPE, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.
Ideally, the molecular weight distribution curve for multimodal polymers of the invention will show two distinction maxima.
For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE, there is by definition a lower molecular weight component (LMW) and a higher molecular weight component (HMW). The LMW component has a lower molecular weight than the higher molecular weight component. This difference is preferably at least 5000. Preferably, in a multimodal LLDPE of use in this invention at least one of the LMW and HMW components is a copolymer of ethylene. Further preferably, at least the HMW component is an ethylene copolymer. Further preferably, also the lower molecular weight (LMW) component may be an ethylene copolymer. Alternatively, if one of the components is a homopolymer, then LMW is the preferably the homopolymer.

Alternatively the multimodal LLDPE may comprise other polymer components, e.g. up to 10 % by weight of a well-known polyethylene prepolymer (obtainable from a pre-polymerisation step as well known in the art). In case of such prepolymer, the prepolymer component is comprised in one of LMW and HMW components, preferably LMW component, as defined above.

The term "ethylene copolymer" is used in this context to encompass polymers comprising repeat units deriving from ethylene and at least one other C₄₋₂₀ alpha olefin monomer. Preferred copolymers are binary and comprise a single comonomer or are terpolymers and comprise two or three comonomers. In any copolymeric HMW component, preferably at least 0.25 mol%, preferably at least 0.5 mol%, e.g. at least 1.0 mol%, such as up to 10.0 mol%, of repeat units derive from the comonomer. Ethylene preferably forms the majority of the HMW component.

The preferred multimodal LLDPE is defined further below.

Accordingly, the multimodal LLDPE has a density in the range of 900 kg/m³ to 950 kg/m³. The density is preferably in the range of 905 kg/m³ to 945 kg/m³, more preferably in the range of 910 kg/m³ to 940 kg/m³ and even more preferably in the range of 920 kg/m³ to 940 kg/m³.

The melt flow rate MFR₂ (according to ISO 1133; 190°C/2.16 kg) of the multimodal LLDPE is preferably in the range 0.01 to 20 g/10min, e.g. 0.05 to 10 g/10min, preferably 0.1 to 6.0 g/10min. The MFR₂ is highly preferably in the range of 0.10 to 5 g/10min.

The MFR₂₁ (according to ISO 1133; 190°C/21.0 kg) of the multimodal LLDPE may be in the range 5 to 500, preferably 10 to 200 g/10min.

The Mw of the multimodal LLDPE, may be in the range 100 000 to 300 000, preferably 150 000 to 270 000. The Mw/Mn of the multimodal LLDPE may be in the range 5 to 30, preferably 8 to 25, more preferably 10 to 20.

The multimodal LLDPE may be formed from ethylene along with at least one C₄₋₂₀ alpha-olefin comonomer, e.g. 1-butene, 1-hexene, 4-methyl-1-pentene, 1-octene or 1-decene. Preferably, the multimodal LLDPE, is a binary copolymer, i.e. the polymer contains ethylene and one comonomer, or a terpolymer, i.e. the polymer contains ethylene and two or three comonomers.

If the multimodal LLDPE is a binary copolymer, i.e. the polymer contains ethylene and one comonomer, it comprises an ethylene hexene copolymer, ethylene octene copolymer or ethylene butene copolymer. The amount of comonomer present in the multimodal LLDPE copolymer, is preferably 0.5 to 12 mol%, e.g. 2 to 10% mole relative to ethylene, especially 4 to 8% mole.

More preferably, the multimodal LLDPE is a terpolymer comprising 1-butene as comonomer and one higher alpha-olefin comonomers.
Such higher alpha-olefin comonomers are preferably C₆-C₁₂-alpha-olefins selected from the group of 1-hexene, 4-methyl-1-pentene, 1-octene and 1-decene.
More preferably 1-hexene or 1-octene, most preferably 1-hexene is used as second comonomer beside 1-butene.
Even more preferably the multimodal LLDPE terpolymers comprise
(A-1) a lower molecular weight (LMW) component of a homopolymer of ethylene and
(A-2) a higher molecular weight component (HMW) of a terpolymer of ethylene, 1-butene and a C₆-C₁₂-alpha-olefin.

The expression "homopolymer of ethylene" used herein refers to a polyethylene that consists substantially, i. e. to at least 98 % by weight, preferably at least 99 % by weight, more preferably at least 99.5 % by weight, most preferably at least 99.8 % by weight of ethylene.

The lower molecular weight component (LMW) of the ethylene homopolymer has a weight average molecular weight preferably in the range of 20 000 to 50 000 g/mol, more preferably of 25 000 to 40 000 g/mol and a melt index MFR₂ in the range of 50 to 3200 g/10min, preferably in the range of 80 to 1000 g/10min and more preferably in the range of 100 to 600 g/10min.
The density of the lower molecular weight component may range from 930 to 980 kg/m³, preferably from 940 to 975 kg/m³, more preferably 960 to 972 kg/m³.
The lower molecular weight component has preferably from 30 to 70 wt%, e.g. 40 to 60% by weight of the bimodal polyethylene with the higher molecular weight component forming 70 to 30 wt%, e.g. 60 to 40% by weight.
The higher molecular weight component has a lower MFR₂ and a lower density than the lower molecular weight component.

The overall comonomer content in the total terpolymer is 0.3 to 7.0 % by mol, preferably 0.6 to 4.5 % by mol, more preferably 1.0 to 3.5 % by mol and most preferably 1.2 to 2.3 % by mol.

Butene is present in an amount of 0.1 to 3.0 % by mol, preferably 0.2 to 2.0 % by mol, more preferably 0.3 to 1.5 % by mol and most preferably 0.4 to 0.8 % by mol.
The C₆ to C₁₂ alpha olefin is present in an amount of 0.2 to 4.0 % by mol, preferably 0.4 to 2.5 % by mol, more preferably 0.7 to 2.0 % by mol and most preferably 0.8 to 1.5 % by mol.

The preferred bimodal terpolymer preferably has a weight average molecular weight in the range of 100 000 to 200 000 g/mol, and a preferred Mw/Mn in the range of 5 to 20, more preferably in the range of 8 to 18, more preferably in the range of 10 to 15.

The density of the preferred terpolymer is between 900 and 950 kg/m³, preferably in the range of 905 kg/m³ to 945 kg/m³, more preferably in the range of 910 kg/m³ to 940 kg/m³ and even more preferably in the range of 920 kg/m³ to 940 kg/m³. Most preferably the density is between 927 and 945 kg/m³.
Preferred terpolymers have a melt flow rate MFR₂ of in the range 0.01 to 20 g/10min, e.g. 0.05 to 10 g/10min, preferably 0.1 to 6.0 g/10min. The MFR₂ is highly preferably in the range of 0.10 to 5 g/10min. 0.01 to 6 g/10 min (when measured at 190°C and 2.16 kg, according to standard ISO 1133), especially from 0.05 to 3.0 or from 0.1 to 2.0 g/10 min, e.g. around 0.5 g/10min.

Such bimodal polymers may be prepared for example by two stage polymerization or by the use of two different polymerization catalysts in a one stage polymerization. It is also possible to employ a dualsite catalyst. It is important to ensure that the higher and lower molecular weight components are intimately mixed prior to extrusion to form a film. This is most advantageously achieved by using a multistage process or a dual site catalyst, but could be achieved also through blending.

To maximise homogeneity, particularly when a blend is employed, it is preferred that the bimodal polyethylene used in the core layer is extruded prior to being extruded to form the film of the invention.
This pre-extrusion step ensures that the higher molecular weight component will be homogeneously distributed though the core layer and minimises the possibility of gel formation in the film.

Preferably the bimodal polyethylene is produced in a multi-stage polymerization using the same catalyst, e.g. a metallocene catalyst or preferably a Ziegler- Natta catalyst. Thus, two slurry reactors or two gas phase reactors could be employed. Preferably however, the bimodal polyethylene is made using a slurry polymerization in a loop reactor followed by a gas phase polymerization in a gas phase reactor.
A loop reactor - gas phase reactor system is well known as Borealis technology, i.e. a BORSTAR® reactor system. The bimodal polyethylene in the core layer is thus preferably formed in a two stage process comprising a first slurry loop polymerization followed by gas phase polymerization in the presence of a Ziegler-Natta catalyst.

The conditions used in such a process are well known. For slurry reactors, the reaction temperature will generally be in the range 60 to 110°C (e.g. 85-110°C) , the reactor pressure will generally be in the range 5 to 80 bar (e.g. 50-65 bar) , and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized.
For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

Preferably, the lower molecular weight component is produced in a continuously operating loop reactor where ethylene is polymerized in the presence of a polymerization catalyst as stated above and a chain transfer agent such as hydrogen. The diluent is typically an inert aliphatic hydrocarbon, preferably isobutane or propane.
The higher molecular weight component can then be formed in a gas phase reactor using the same catalyst.

Where the higher molecular weight component is made as a second step in a multistage polymerization it is not possible to measure its properties directly. However, e.g. for the above described polymerization process of the present invention, the density, MFR2 etc. of the HMW component can be calculated using Kim McAuley's equations.
Thus, both density and MFR₂ can be found using K. K. McAuley and J. F. McGregor: On-line Inference of Polymer Properties in an Industrial Polyethylene Reactor, AlChE Journal, June 1991, Vol. 37, No, 6, pages 825-835. The density is calculated from McAuley's equation 37, where final density and density after the first reactor is known. MFR₂ is calculated from McAuley's equation 25, where final MFR₂ and MFR₂ after the first reactor are calculated. Such bimodal terpolymers are known in the state of the art and are described e.g. in WO 03/066698 or WO 2008/034630 or are commercially available, such as BorShape™ FX1001 and BorShape™ FX1002 (both from Borealis AG, Vienna, Austria).

In addition to the multimodal LLDPE, preferably the bimodal LLDPE terpolymer may also contain antioxidants, process stabilizers, slip agents, pigments, UV-stabilizers and other additives known in the art.
Examples of stabilizers are hindered phenols, hindered amines, phosphates, phosphites and phosphonites.
Examples of pigments are carbon black, ultra-marine blue and titanium dioxide.
Examples of other additives are e. g. clay, talc, calcium carbonate, calcium stearate, zinc stearate and antistatic additives like.

The additives can be added as single components or as part of a masterbatch as is known in the art.
In one embodiment it is preferred to add a pigment, preferably titanium dioxide to obtain white films, e.g. for providing better contrast. Most preferably this pigment is added as part of a masterbatch.

### Ad tubular or autoclave low density polyethylene (LDPE):

The low density polyethylene (LDPE) to be used in the blend has been produced in a tubular reactor or by autoclave technique.

Polymerisation in tubular or autoclave reactor is well known and well documented in the literature in the polymerisation field.

The low density polyethylene (LDPE) preferably is a low density homopolymer of ethylene (referred herein as LDPE homopolymer).
Generally, the polymerization of the low density polyethylene (LDPE) is performed by reacting the monomers under the action of one or more radical initiators, such as peroxides, oxygen, azo compounds or combinations thereof, at a temperature of about 150 to 350°C and at a pressure of about 100 to 400 MPa preferably in a tubular reactor. The monomers are normally compressed in several stages up to the desired pressure before introduction into the reactor. The LDPE used according to the invention may be produced in a tubular reactor, as already stated above. A tubular reactor typically consists of several hundred meters of jacketed high pressure tubing arranged as a series of straight sections connected by 180° bends. Tubular reactors are either single-feed or multi-feed reactors, including split-feed reactors. In a single-feed tubular reactor (also referred to as front-feed reactor), the total monomer flow is fed to the inlet of the first reaction zone. In a multi-feed tubular reactor, the monomers are fed into the reactor at several locations along the reactor. In a split-feed reactor, the compressed monomer mixture are split into several streams and fed into the reactor at different locations thereof. Reaction is started by injection of the radical initiators. The reaction mixture cools after the first reaction peak and additional initiator is added to start a second reaction zone. The number of initiator injection points determines the number of reaction zones. A tubular reactor for production of ethylene polymers by high pressure radical polymerization usually comprises a total of two to five reaction zones. When the reaction is completed, the temperature and the pressure are lowered, typically in two steps using a high-pressure separator and a low-pressure separator. The resulting polymer is recovered and non-reacted monomers are either removed or recycled back to the reactor. As radical initiators, initiators commonly known in the art may be employed. Further details of the production of ethylene polymers by high pressure radical polymerization can be found for example in the Encyclopedia of Polymer Science and Engineering, Vol. 6 (1986), pp 383-410.
Suitable tubular technologies/processes are well known in the art. Examples are LyondellBasell Lupotech T, SABTEC CTR tubular LDPE technology, ExxonMobil Chemical's high pressure tubular process or DSM's 'Clean Tubular Reactor Technology'.

For the autoclave process the reaction pressure is typically in the range of 130 to 200 MPa. To bring the ethylene to this reaction pressure normally two compressors are used, which also take in unreacted recycle ethylene from the separators.
The autoclave reactor takes in the pressurized ethylene, to which organic peroxides are added to create free radicals, in order to initiate the polymerization process. This reaction propagates the formation of CH₂ polymer chains. The reactor mixer ensures even distribution of the polymerization process in the reactor.
The autoclave functions as an adiabatic continuous stirred-tank reactor (CSTR), with the heat of reaction being removed by the fresh ethylene entering the reactor.
Most modern reactors have two or more zones with increasing temperatures. The reaction temperatures are maintained constant by controlling the speeds of the pumps feeding initiators into the respective zones. The first zone is typically160°C up to 180°C and the final zone 290°C up to 310°C.
The free radical initiator is introduced in each of the different reactor zones to optimize productivity and performance.
The reaction is terminated at the bottom of the reactor and the LDPE melt exits for the high pressure (HP) and low pressure (LP) separators, where it is cooled, and unreacted ethylene is re-compressed and recycled back to the autoclave reactor, as mentioned above.
Low molecular weight polymers (wax, oils) are removed in other separators. The purified LDPE exits the LP separator and is then sent to the extruders where the melt is homogenized, more property enhancing additives are added, and the final product is pelletized and de-gassed before packaging and delivery.

Suitable autoclave technologies/processes are also well known in the art and are, for example, licensed by ExxonMobil, ICI (through Simon Carves), LyondellBasell (LUPOTECH A) or Versalis.

The meaning of low density polyethylene (LDPE) is well known and documented in the literature. Although the term LDPE is an abbreviation for low density polyethylene, the term is understood not to limit the density range, but covers the LDPE-like HP polyethylenes, which are produced by free-radical polymerization in a high-pressure process, with low, medium and higher densities. The term LDPE describes and distinguishes only the nature of HP polyethylene with typical features, such as different branching architecture, compared to the polyethylene produced in the presence of an olefin polymerization catalyst. Moreover, said low density polyethylene (LDPE), preferably the low density polyethylene (LDPE) homopolymer, may be unsaturated.

As already outlined above, the low density polyethylene of the present invention has been produced in a tubular or autoclave reactor by radical initiated polymerization where the polymerization is performed by reacting the ethylene monomers under the action of one or more radical initiators, such as peroxides, oxygen or combinations thereof.
Preferably a low density polyethylene produced in a tubular reactor is used for the present invention.

The low density polyethylene of the present invention is a polyethylene having a density in the range of 905 to 940 kg/m³, more preferably in the interval of 910 to 935 kg/m³ and yet more preferably in the range of 915 to 930 kg/m³.

Preferably, the low density polyethylene of the present invention has a melt flow rate (MFR) according to ISO 1133 (190°C, 2.16 kg) in the range of 0.01 g/10 min to 10.0 g/10 min, more preferably in the range of 0.05 g/10 min to 5.0 g/10 min, yet more preferably in the range of 0.10 g/10 min to 2.0 g/10 min and most preferably in the range of 0.15 g/10 min to 1.5 g/10 min.

### Ad blend:

The films of the present invention comprise the two above described components in a specific range. Thus the blends comprise a) 5 to 60 wt% of the multimodal LLDPE, preferably the bimodal LLDPE terpolymer and b) 40 to 95 wt% of the tubular or autoclave low density polyethylene (LDPE), preferably the tubular low density polyethylene homopolymer.
Preferably the blends comprise a) 10 to 50wt% LLDPE and b) 50 to 90 wt% LDPE, more preferably a) 20 to 40 wt% LLDPE and b) 60 to 80 wt% LDPE, and even more preferably a) 25 to 35 wt% LLDPE and b) 65 to 75 wt% LDPE.

The blends of the invention may be prepared simply by mixing the components but to ensure homogeneity and hence no white spots, it will be appreciated that the components have to be compounded. This can be achieved by any conventional method known to those skilled in the art, e.g. extrusion or kneading.
For film formation using a polymer mixture it is important that the different polymer components be intimately mixed prior to extrusion and casting/blowing of the film as otherwise there is a risk of inhomogeneities, e.g. gels, appearing in the film. Thus, it is especially preferred to thoroughly blend the components, for example using a twin screw extruder, preferably a counter-rotating extruder, prior to extrusion and film blowing. Sufficient homogeneity can also be obtained by selecting the screw design for the film extruder such that it is designed for good mixing and homogenising.

### Ad film:

The films of the invention can be monolayer films or multilayer films. In its simplest embodiment, the present invention covers a film which is a monolayer film comprising the above described blend of LLDPE and LDPE. The monolayer film may simply consist essentially of this blend.
The term "consist essentially of" is used in this context to indicate that the only polyolefins present is the multimodal LLDPE in combination with the tubular or autoclave LDPE. The film may however contain standard polymer additives as described below, possibly added via a masterbatch. The levels of these additives are low, typically below 3 wt%.

The monolayer film can be formed by extrusion of the necessary polymer blend to form the film. Monolayer films might also be produced by coextrusion of the same material (i.e. blend) into separate layers. Such layers become essentially indistinguishable after extrusion.

Films of the invention can also be multi-layered. Multilayer films are preferably formed from at least two layers, ideally at least three layers, such as 3 layers, 5 layers or 7 layers. Films preferably comprise therefore at least adjacent layers A and B, preferably A, B and C.

The (A) layer of the film is an external layer and is the sealing layer herein. It is preferably involved in sealing of the film (ideally to itself). Said layer (A) comprises the blend of a) multimodal LLDPE, preferably bimodal LLDPE terpolymer and b) tubular or autoclave LDPE, preferably tubular LDPE homopolymer, as defined herein.
A further possibility is that layer (A) comprises a blend of tubular LDPE and an ethylene or propylene based plastomer with a density below 910 kg/m³

Where the A layer comprises the blend of the invention, the nature of the B layer is less critical. The B layer might comprise a blend of LDPE and unimodal LLDPE or a blend of LDPE and HDPE (e.g. having a density of more than 940 kg/m³) as described herein. However, the B layer too may contain the blend of the multimodal LLDPE and the tubular or autoclave LDPE of the invention. That might be the same or a different blend of LLDPE and LDPE as may be used in the A layer.
Layer B may furthermore be composed of the before defined multimodal LLDPE.
Suitable unimodal LLDPEs preferably have a single comonomer, preferably the unimodal LLDPE is an ethylene hexene copolymer, ethylene octene copolymer or ethylene butene copolymer. The amount of comonomer present in the unimodal LLDPE is preferably 0.5 to 12 mol%, e.g. 2 to 10% mole, especially 4 to 8% mole.
The MFR₂ of such compounds may be in the range 0.01 to 20 g/10min, e.g. 0.05 to 10 g/10min, preferably 0.1 to 6.0 g/10min. The MFR₂ is highly preferably in the range of 0.10 to 5 g/10min, such as 0.1 to 2 g/10min. 10
As used herein, the unimodal LLDPE polymer is an ethylene copolymer having a density of 940 kg/m³ or less. Preferred unimodal LLDPE's may have a density of 905 to 940 kg/m³, more preferably 910 to 937 kg/m³, e.g. 935 kg/m³ or below. In one preferable embodiment even densities of 925 kg/m³ or below are highly feasible.

Suitable HDPE preferably has a density within the range of about 941 kg/m3 to about 970 kg/m3. More preferably, the density is within the range of about 945 kg/m3 to about 965 kg/m3.

The HDPE polymer to be employed in accordance with the present invention may be a known and e.g. commercially available, polyethylene polymer or said HDPE polymer may be prepared using any coordination catalyst, typically ZN catalysts, Cr-catalyst as well as single site catalysts (SSC).

The melt flow rate (MFR) of the HDPE polymer to be employed for the outer layers in accordance with the present invention is not critical and can be varied depending on the mechanical properties desired for an end application. In one preferable embodiment MFR2 value in the range of from 0.05 to 10 g/10 min, preferably 0.1 to 7.0 g/10 min, more preferably from 0.2 to 5.0 g/10 min, yet more preferably 0.3 to 3.0 g/10 min, even more preferably 0.4 to 2.0 g/10 min an most preferably 0.5 to 1.3 g/10 min are desired.

It is preferred if two or more of the layers in the films of the invention comprise the blend of the multimodal LLDPE and the tubular or autoclave LDPE, as hereinbefore defined.

Films of the invention might contain further layers such as a layer C adjacent layer B. Films of the invention therefore preferably contain a layer A and a layer B as herein defined. If present, a layer (C) can contain a variety of polymers such as HDPE, LDPE, a polypropylene, a barrier layer e.g. based on polyamide and so on. Especially were the films of the invention comprise 5 or 7 layers, the presence of a barrier layer is preferred. There might also be adhesive layers present.
If present, layer (C) in such a film is preferably the same as layer B or layer A thus forming an ABA or ABB type film structure.

### Ad Film layers

The term "consisting essentially of" used below in relation to film layer materials is meant to exclude only the presence of other polyolefin components, preferably other polymers. Thus said term does not exclude the presence of additives, e.g. conventional film additives, i.e. each layer independently may contain conventional film additives such as antioxidants, UV stabilisers, acid scavengers, nucleating agents, anti-blocking agents, slip agents etc. as well as polymer processing agent (PPA) and so on. Additives can be present as part of a masterbatch.
Films of the invention preferably comprise layers (A) and (B) below, especially layers (A), (B) and (C) below.
In most preferred embodiments, the following film structures are preferred:

### Layer (A)

Accordingly said layer (A) comprises the blend of the multimodal LLDPE and the tubular or autoclave LDPE. Layer (A) preferably consists essentially of this blend.
Alternatively layer (A) can comprise or preferably consists of a blend of tubular or autoclave LDPE as defined above and an ethylene or propylene based plastomer with a density below 910 kg/m³. In this case the ethylene or propylene based plastomer is present in an amount of 10 to 45 wt%, preferably 20 to 40 wt%, and the LDPE is present in an amount of 55 to 90 wt%, preferably 60 to 80 wt%.

### Layer (B)

Layer (B) preferably comprises at least 50 wt%, preferably at least 60 wt%, more preferably at least 70 wt% of the above described multimodal LLDPE. In some embodiments even about 80 wt% or more of multimodal LLDPE is preferred. Preferably said layer (B) consists of a multimodal LLDPE polymer(s) as defined above. It may therefore comprise a blend of two multimodal LLDPE's or a single multimodal LLDPE or a blend with tubular or autoclave LDPE.
Layer (B) may also comprise a blend of unimodal LLDPE and LDPE as described above. However, the B layer too may contain the blend of the multimodal LLDPE and the tubular or autoclave LDPE of the invention in the ranges as described under the paragraph "ad blend".

### Layer (C)

Said layer (C) may have a polymer composition as described in relation to layer (A) above or layer (B) above. Preferably layers (A) and (C) are identical in an ABA type film structure. Alternatively layer C might contain an HDPE having a density of more than 940 kg/m³, a barrier layer and so on.
If layer (C) is used as blocking layer, layer (C) is preferably composed of a blend of the multimodal LLDPE, as described above, and an ethylene based plastomer with a density below 910 kg/m³ or of a blend of the LDPE, as described above, and an ethylene or propylene based plastomer with a density below 910 kg/m³. The plastomer is preferably present in the blend in an amount of 20 to 80 wt%, more preferably in an amount of 40 to 75 wt% and even more preferably in an amount of 50 to 70 wt%.
It is also possible to use 100wt% plastomer for the blocking layer or any other material known in the state of the art for being suitable in blocking layers, like EVA, EBA, mPE, etc..

The film thickness distribution (%) of a ABC layer film is preferably 10 to 40%/20 to 80%/10 to 40%, preferably 12 to 30%/40 to 76%/12 to 30%, of the total film thickness (100%).

In a further preferred embodiment, the films of the invention comprise at least five/six layers, preferably in the following order:
(i) a first outer layer (A),
(ii) a second outer layer (B),
(iii) a first inner layer (C),
(iv) a second inner layer (C),
(v) a third outer layer (B) and
(vi) a fourth outer layer (A)

This film is preferably formed from two identical ABC type films and it can be argued that the centre C layers merge to become one (and hence a 5 layer construction), this is a so called blocked film structure. For an ABCCBA film structure the thickness of the layers may conform to 7.5-27.5%/15-35%/5-25%/15-35%/7.5-27.5%, wherein the total film thickness is 100% and the amount of core layer is the sum of two layers (C).

In an ABCCBA structure it is preferred if the (C) layers are not the same as the (A) layers. In particular, the (C) layers can comprise a very low density polyethylene as hereinbefore defined and/or other suitable polymers as described above, like EVA.

Each A, B or C layer may independent have a composition as hereinbefore defined. Ideally, the ABCCBA film is formed from two identical ABC films laminated together via their (C) layers.

### Ad Film preparation

The different polymer components in any of layers of the film, like the multimodal LLDPE and the tubular or autoclave LDPE for layer (A), are typically intimately mixed prior to layer formation, for example using a twin screw extruder, preferably a counter- extruder.
Then the blend of the multimodal LLDPE and the tubular or autoclave LDPE is converted into a mono-layer film. Preferably, the blend is converted into a monolayer film on a blown-film line.
In order to manufacture multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.
The blown (co)extrusion can be effected at a temperature in the range 160°C to 240°C, and cooled by blowing gas (generally air) at a temperature of 10 to 50°C to provide a frost line height of 1 to 8 times the diameter of the die.
The blow up ratio should generally be in the range 1.2 to 6, preferably 1.5 to 4.

Preferably for ABCCBA type film structures, said film can advantageously be prepared first by coextruding compositions forming the layers (B), (C) and (A) through an annular die, blowing by blown extrusion into a tubular film to form a bubble. The formed bubble is then collapsed e.g. in nip rolls to form said film where layers (C) are contacted inside/inside, i.e. ABC/CBA. Alternatively, the coextruded bubble may be collapsed and split into two films.

The obtained monolayer or multilayer film is subjected to a subsequent stretching step, wherein the film is stretched in the machine direction (MDO). Stretching may be carried out by any conventional technique using any conventional stretching devices which are well known to those skilled in the art.
The MDO process can be done in-line, wherein the MDO unit is directly linked to the blown film unit, i.e. the film leaving the blown film line is directly transferred in the MDO unit.
The MDO process can also be done off-line, wherein the MDO unit is an autonomous unit. In this case the film leaving the blown film line is first wound on a winder and is then supplied to the off-line MDO unit, where the film has to be unwind on a un-winder unit before it can be stretched.

During the MDO, the film obtained from the blown-film line is heated to an orientation temperature. Preferably, the temperature range for orientation can be 25K below the VICAT A-level of the (outer) film layer material up to the melting temperature of the (outer) film layer material. The heating is preferably performed utilizing multiple heating rollers.
Next, the heated film is fed into a slow drawing roll with a nip roller, which has the same rolling speed as the heating rollers. The film then enters a fast drawing roll. The fast drawing roll has a speed that is 2 to 10 times faster than the slow draw roll, which effectively orients the film on a continuous basis.

The oriented film then enters annealing thermal rollers, which allow stress relaxation by holding the film at an elevated temperature for a period of time.
The annealing temperature is preferably within the same temperature range as used for stretching or slightly below (e.g. 10 to 20K below), with room temperature being the lower limit. Finally, the film is cooled through cooling rollers to an ambient temperature.

The ratio of the film thickness before and after orientation is called "drawdown ratio" or stretch ratio.
The stretch ratio varies depending on many factors including the desired film thickness, film properties, and multilayer film structures.

The preparation process of the uniaxially oriented in MD monolayer or multilayer film of the invention comprises at least the steps of forming the monolayer or multilayer film and stretching the obtained monolayer or multilayer film in the machine direction in a draw ratio of at lower than 1:4, preferably in the range of 1:3.0 to 1:3.8

The film is stretched less than 4 times up its original length in the machine direction. This is stated herein as a stretch ratio of lower than 1:4, i.e. "1" represents the original length of the film and "4" denotes that it has been stretched to 4 times that original length.
An effect of stretching (or drawing) is that the thickness of the film is similarly reduced. Thus a stretch ratio of less than 1:4 preferably also means that the thickness of the film is less than four times the original thickness.

Thus the present invention is also related to a process for preparing a film as defined above comprising the steps of
(i) mixing a multimodal linear low density polyethylene a) and a tubular or autoclave low density polyethylene b) in the desired wt% amounts to obtain a blend
(ii) converting the blend into a blown film on a blown-film line and
(iii) subsequently stretching the blown film with a stretch ratio below 1:4 either in-line or off-line.

After orientation, the film of the invention is typically 20 to 150 µm, more preferably 25 to 120 µm in thickness. It is especially preferred if the films are 30 to 100 µm in thickness after orientation, such as 35 to 50 microns.
This means that for producing e.g. a 40 µm film the film thickness before orientation has to be only less than 160 µm. For example using a stretch ratio of 1:3.5 to yield a 40 µm film needs a primary film of 140 µm, whereas using standard stretch rations of 1:6 a 240 µm primary film has to be used.

The machine direction oriented films according to the invention show very advantageous and surprising properties.
As is shown in the experimental part the MDO films have high stiffness and a well-balanced relative tear resistance in machine and transverse direction compared to films being composed only of a multimodal LLDPE being stretched with standard stretching ratios of 1:6.

Thus the machine direction oriented films according to the invention have a tensile modulus in machine direction measured according to ISO 527-3 on films with a thickness of 40µm of at least 400 MPa and a difference of the relative tear resistance in machine direction and in transverse direction of not more than 180 N/mm.

Preferably the machine direction oriented films according to the invention have a tensile modulus in machine direction measured according to ISO 527-3 on films with a thickness of 40µm of at least 420 MPa and more preferably of at least 450 MPa.
The difference of the relative tear resistance in machine direction and in transverse direction of such films is preferably not more than 160 N/mm and more preferably not more than 140 N/mm.

Additionally the machine direction oriented films according to the invention have a haze according to ASTM D1003 for a film thickness of 40 µm of below 20.0 %, preferably of below 17.0 % and more preferably of below 15.0 % and a gloss (20°) according to ASTM D2457 (ISO 2813) for a film thickness of 40 µm of at least 20.0 %, preferably of at least 30 % and more preferably of at least 40 %.

Due to these advantageous properties the films according to the invention are highly suitable for being used in the packaging area.
The film being especially suitable for use in grocery sacks, institutional and consumer can liners, merchandise bags, shipping sacks, food packaging films, multi-wall bag liners, produce bags, shrink films, label films, deli wraps, tissue overwrap and shrink wraps.

### Experimental Part

### Methods:

### Tensile Modulus

### Film TD (transversal direction) and MD (machine direction)

Tensile moduli in machine and transverse direction were determined acc. to ISO 527-3 on films with a thickness of 40 µm at a cross head speed of 1 mm/min for the MDO blown film of the inventive example (thickness of films of comparative examples have 25 µm/40 µm/60 µm).

### Elmendorf tear resistance

Applies both for the measurement in machine direction (MD) and transverse direction (TD). The tear strength is measured using the ISO 6383/2 method. The force required to propagate tearing across a film sample is measured using a pendulum device. The pendulum swings under gravity through an arc, tearing the specimen from pre-cut slit. The film sample is fixed on one side by the pendulum and on the other side by a stationary clamp. The tear resistance is the force required to tear the specimen. The relative tear resistance (N/mm) is then calculated by dividing the tear resistance by the thickness of the film.

**Gloss** and **haze** as measures for the optical appearance of the films were determined according to ASTM D2457 (gloss) and ASTM D1003 (haze) on machine direction oriented film samples with a thickness of 40 µm for IE1 and 25 µm to 60 µm for CE1 to CE3.
Gloss was determined according to ISO 2813 (ASTM D2457) at an angle of 20°

### Materials used:

- **FX1001:**: bimodal Ziegler Natta produced terpolymer (C2/C4/C6) Grade BorShape™ (provided by Borealis AG). FX1001 has MFR₅ of 0.85 g/10 min, density of 931 kg/m³.
- **FT5230:**: low Density Polyethylene produced by Tubular Technology (provided by Borealis AG). FT5230 has MFR₂ of 0.75 g/10 min, density of 923 kg/m³.
- **FT3200:**: low Density Polyethylene produced by Tubular Technology (provided by Borealis AG). FT5230 has MFR₂ of 0.25 g/10 min, density of 920 kg/m³.
- **FB2310:**: Borstar® FB2310 high molecular weight linear low density polyethylene (provided by Borealis AG). MFR₂ of 0.20 g/10 min, density of 931 kg/m³.

### Film Sample Preparation

### Comparative Example 1

Film Samples were produced by extrusion on commercial scale mono-layer extrusion blown film line with die diameter 200 mm, frost line height 3DD, at a blow up ratio (BUR) 1:3 and die gap 1.2 mm, with internal bubble cooling. Extruder temp setting: 200 - 215°C to form 40µm monolayer films. Three monolayer films were produced:
Film 1: 100 wt% FX1001
Film 2: 80 wt% FX1001 + 20 wt% FT5230
Film 3: 20 wt% FX1001 + 80 wt% FT5230

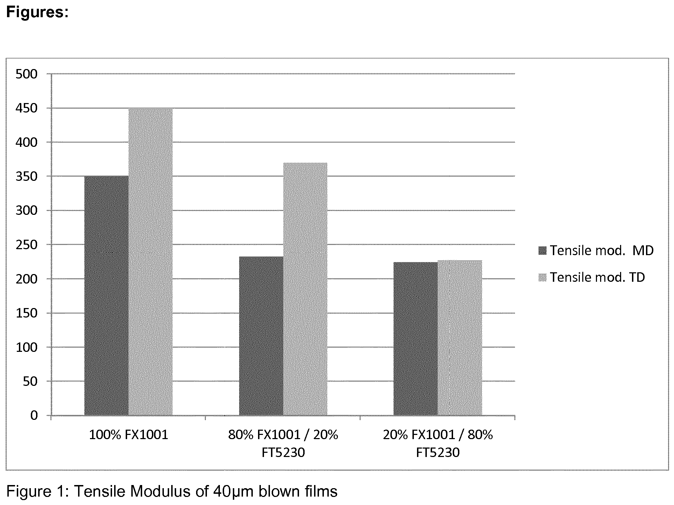

Table 1 and Figure 1 show the Tensile Modulus in machine direction (MD) and transverse direction (TD) of the 40µm monolayer blown films

**Table 1**

| **Property** | **Unit** | **Film 1** | **Film 2** | **Film 3** |
|---|---|---|---|---|
| Tensile Modulus MD | [MPa] | 350 | 233 | 225 |
| Tensile Modulus TD | [MPa] | 450 | 370 | 228 |

As can be easily seen from Table 1 and Figure 1 the addition of an LDPE to FX1001 reduces the stiffness for 40µm monolayer blown films.

### Inventive Example 1 (IE1) and Comparative Examples 2 to 4 (CE2 - CE4)

5 monolayer films were produced:
IE1: 30 wt% FX1001 + 70 wt% FT3200
CE2: 100 wt% FX1001
CE4 + CE5: 100 wt% FB2310

The film for IE1 having a primary film thickness of 140 µm was produced on the same line as the films for CE1, see above.
The films for CE2 and CE4 were produced by extrusion on commercial scale 7 layer extrusion blown film line with die diameter 300 mm, frost line height 3DD, at a blow up ratio (BUR) 1:2.7 and die gap 1.5 mm, with internal bubble cooling.
The extruder comprised seven extruders with 50 mm diameter and L/D 30.
Extruder temp setting: 200 - 215°C to form 150 resp. 360 µm monolayer films Seven extruders to be utilised AAAAAAA to form monolayer structure.
The film for CE3 was produced on a commercial scale 3 layer extrusion blown film line with die diameter 300 mm, frost line height 3DD, at a blow up ratio (BUR) 1:2.7 and die gap 1.5 mm, with internal bubble cooling.
The extruder comprised 3 extruders with 50 mm diameter and L/D 30.
Extruder temp setting: 200 - 215°C to form 160 µm monolayer film.

The so produced monolayer blown films where then transferred to an off-line MDO unit manufactured by Hosokawa Alpine AG in Augsburg/Germany. The unit consists of preheating, drawing, annealing, and cooling sections, with each set at specific temperatures to optimize the performance of the unit and produce films with the desired properties. The heating was at 105°C to 110°C, the stretching was done at 105 to110 °C, annealing and cooling was done at 100 ° down to 30 °C.
The film obtained from blown film extrusion was pulled into the orientation machine then stretched between two sets of nip rollers where the second pair runs at higher speed than the first pair resulting in the desired draw ratio. Stretching is carried out with the respective draw ratios to reach the desired thickness. (draw ratios and final as well as starting thickness of MDO films are given in Table 2) After exiting the stretching machine the film is fed into a conventional film winder where the film is slit to its desired width and wound to form reels.

The properties of the MDO films are also given in Table 2:

**Table 2:**

| Examples | | | IE1 | CE2 | CE3 | CE4 |
|---|---|---|---|---|---|---|
| Primary film thickness [µm] | | | 140 | 360 | 160 | 150 |
| Draw ratio | | | 1:3.5 | 1:6 | 1:4 | 1:6 |
| Final film thickness [µm] | | | 40 | 60 | 40 | 25 |

| | Parameter | unit | | | | |
|---|---|---|---|---|---|---|
| Tensile test MD | Tensile modulus | [MPa] | 455 | 947 | 150 | 806 |
| Tensile test TD | Tensile modulus | [MPa] | 757 | 1124 | 600 | 978 |
| Elmendorf MD | RELATIVE TEAR RESISTANCE | [N/mm] | 57.3 | 95.7 | 52.5 | 130.1 |
| Elmendorf TD | RELATIVE TEAR RESISTANCE | [N/mm] | 184 | 306.5 | 700.0 | 345.7 |
| Optics | Haze | [%] | 11.4 | 25.0 | 21.0 | 20.0 |
| Optics | Gloss (20°) | [%] | 43.3 | 15.2 | 17.3 | 18.6 |

As can be seen from Table 2, the film according to the invention, comprising the combination of the bimodal LLDPE terpolymer and the tubular LDPE, shows already at a stretch ratio of 1: 3.5 balanced tear resistance properties in machine and transverse direction while maintaining a high level of stiffness, especially when compared to CE3 (stretch ratio 1:4).
This is surprising especially in view of Comparative Example 1.
Comparative films do not have this balance in tear resistance properties in machine and transverse direction or have to be stretched with a clearly higher stretch ratio of 1:6 to reach a similar balance.
Furthermore the films of the Comparative Examples all have to start from a primary film of higher thickness.
Additionally the film according to the invention, comprising the combination of the bimodal LLDPE terpolymer and the tubular LDPE show excellent optical properties compared to CE1 to CE3.

## Claims

1. Film comprising a blend of
a) 5 to 60 wt% of a multimodal linear low density polyethylene comprising ethylene and at least one C4-20 alpha olefin comonomer and having a density of 900 to 950 kg/m³ and
b) 40 to 95 wt% of a tubular or autoclave low density polyethylene having a density of 905 to 940 kg/m³,
the film being uniaxially stretched in the machine direction with a stretch ratio below 1:4.

2. Film according to claim 1, the film having a tensile modulus in machine direction measured according to ISO 527-3 on films with a thickness of 40µm of at least 400 MPa and a difference of the relative tear resistance in machine direction and in transverse direction of not more than 180 N/mm.

3. Film according to claim 1 or 2, the film having a haze according to ASTM D1003 for a film thickness of 40 µm of below 20.0 % and a gloss (20°) according to ASTM D2457 (ISO 2813) for a film thickness of 40 µm of at least 20.0 %.

4. Film according to any of the preceding claims, wherein the multimodal linear low density polyethylene is a multimodal linear low density polyethylene terpolymer comprising ethylene and at least two C4-20 alpha olefin comonomers.

5. Film according to claim 4, wherein the multimodal linear low density polyethylene is a bimodal ethylene/1-butene/C6-C12-alpha-olefin terpolymer with a density of 915 to 945 kg/m³.

6. Film according to any of the preceding claims, wherein the low density polyethylene is a tubular or autoclave low density polyethylene with a density of 910 to 935 kg/m³.

7. Film according to any of the preceding claims, wherein the blend comprises 10 to 50 wt% of the multimodal linear low density polyethylene a) and 50 to 90 wt% of the tubular or autoclave low density polyethylene b).

8. Film according to any of the preceding claims, wherein the film has a thickness of 20 to 150 µm after stretching.

9. Process for preparing a film according to any of the preceding claims comprising the steps of
(i) mixing a multimodal linear low density polyethylene a) and a tubular or autoclave low density polyethylene b) in the desired wt% amounts to obtain a blend
(ii) converting the blend into a blown film on a blown-film line and
(iii) subsequently stretching the blown film with a stretch ratio below 1:4 either in-line or off-line.

10. Use of a film according to any of the preceding claims 1 to 8 in the packaging area.

11. Use according to claim 10 for grocery sacks, institutional and consumer can liners, merchandise bags, shipping sacks, food packaging films, multi-wall bag liners, produce bags, shrink films, label films, deli wraps, tissue overwrap and shrink wraps

## Patentansprüche

1. Folie, umfassend eine Mischung aus
a) 5 bis 60 Gew.-% von einem multimodalen linearen Polyethylen niederer Dichte, das Ethylen und mindestens ein C4-20 alpha-Olefincomonomer umfasst und eine Dichte von 900 bis 950 kg/m³ aufweist und
b) 40 bis 95 Gew.-% von einem Schlaufen- oder Autoklavpolyethylen niederer Dichte, das eine Dichte von 905 bis 940 kg/m³ aufweist,
wobei die Folie uniaxial in Maschinenrichtung mit einem Streckverhältnis von unter 1:4 verstreckt ist.

2. Folie nach Anspruch 1, wobei die Folie einen Zugmodul in Maschinenrichtung, gemessen gemäß ISO 527-3 an Folien mit einer Dicke von 40 µm, von mindestens 400 MPa und eine Differenz der relativen Reißfestigkeit in Maschinenrichtung und in Querrichtung von nicht mehr als 180 N/mm aufweist.

3. Folie nach Anspruch 1 oder 2, wobei die Folie eine Trübung gemäß ASTM D1003 für eine Foliendicke von 40 µm von unter 20,0 % und einen Glanz (20°) gemäß ASTM D2457 (ISO 2813) für eine Foliendicke von 40 µm von mindestens 20,0 % aufweist.

4. Folie nach einem der vorhergehenden Ansprüche, wobei das multimodale lineare Polyethylen niederer Dichte ein multimodales lineares Polyethylenterpolymer niederer Dichte ist, das Ethylen und mindestens zwei C4-20 alpha-Olefincomonomere umfasst.

5. Folie nach Anspruch 4, wobei das multimodale lineare Polyethylen niederer Dichte ein bimodales Ethylen/1-Buten/C6-C12-alpha-Olefinterpolymer mit einer Dichte von 915 bis 945 kg/m³ ist.

6. Folie nach einem der vorhergehenden Ansprüche, wobei das Polyethylen niederer Dichte ein Schlaufen- oder Autoklavpolyethylen niederer Dichte mit einer Dichte von 910 bis 935 kg/m³ ist.

7. Folie nach einem der vorhergehenden Ansprüche, wobei die Mischung 10 bis 50 Gew.-% von dem multimodalen linearen Polyethylen niederer Dichte a) und 50 bis 90 Gew.-% von dem Schlaufen- oder Autoklavpolyethylen niederer Dichte b) umfasst.

8. Folie nach einem der vorhergehenden Ansprüche, wobei die Folie nach dem Verstrecken eine Dicke von 20 bis 150 µm hat.

9. Verfahren zum Herstellen von einer Folie nach einem der vorhergehenden Ansprüche, umfassend die folgenden Schritte:
(i) Mischen von einem multimodalen linearen Polyethylen niederer Dichte a) und einem Schlaufen- oder Autoklavpolyethylen niederer Dichte b) in den gewünschten Gew.-%-Mengen, um eine Mischung zu erhalten
(ii) Umwandeln von der Mischung zu einer Blasfolie auf einer Blasfolienanlage und
(iii) anschließendes Verstrecken von der Blasfolie mit einem Streckverhältnis von unter 1:4, und zwar entweder in der Anlage [Englisch "in-line"] oder von der Anlage getrennt [Englisch "off-line"].

10. Verwendung von einer Folie nach einem der vorhergehenden Ansprüche 1 bis 8 im Verpackungsbereich.

11. Verwendung nach Anspruch 10 für Lebensmittelsäcke, Institutionelle- und Verbaucherkonservendosenauskleidungen, Warentaschen, Versandsäcke, Lebensmittelverpackungsfolien, Mehrwandtaschenauskleidungen, Erzeugnisbeuteln, Schrumpffolien, Etikettenfolien, Feinkostverpackungen, Gewebeumverpackungen und Schrumpffolien.

## Revendications

1. Film comprenant un mélange de :
a) 50 à 60% en poids d'un polyéthylène linéaire multimodal de faible densité comprenant de l'éthylène et au moins un comonomère d'alpha-oléfine en C₄-C₂₀ et ayant une masse volumique de 900 à 950 kg/m³ et
b) 40 à 95 % en poids d'un polyéthylène tubulaire ou autoclave de faible densité ayant une masse volumique de 905 à 940 kg/m³,
le film étant étiré de manière uniaxiale dans le sens machine avec un rapport d'étirage inférieur à 1:4.

2. Film selon la revendication 1, le film ayant un module de traction dans le sens machine mesuré selon la norme ISO 527-3 sur des films d'une épaisseur de 40 µm d'au moins 400 MPa et une différence de la résistance à la déchirure relative dans le sens machine et dans le sens travers de pas plus de 180 N/mm.

3. Film selon la revendication 1 ou 2, le film ayant un voile selon la norme ASTM D1003 pour une épaisseur de film de 40 µm en dessous de 20,0 % et une brillance (20°) selon la norme ASTM D2457 (ISO 2813) pour une épaisseur de film de 40 µm d'au moins 20,0%.

4. Film selon l'une quelconque des revendications précédentes, dans lequel le polyéthylène linéaire multimodal de faible densité est un terpolymère de polyéthylène linaire multimodal de faible densité comprenant de l'éthylène et au moins deux comonomères d'alpha-oléfine en C₄-C₂₀.

5. Film selon la revendication 4, dans lequel le polyéthylène linéaire multimodal de faible densité est un terpolymère bimodal d'éthylène/1-butène/alpha-oléfine en C₆-C₁₂ avec une masse volumique de 915 à 945 kg/m³.

6. Film selon l'une quelconque des revendications précédentes, dans lequel le polyéthylène de faible densité est un polyéthylène tubulaire ou autoclave de faible densité d'une masse volumique de 910 à 935 kg/m³.

7. Film selon l'une quelconque des revendications précédentes, dans lequel le mélange comprend 10 à 50% en poids du polyéthylène linéaire multimodal de faible densité a) et 50 à 90% en poids du polyéthylène tubulaire ou autoclave de faible densité b).

8. Film selon l'une quelconque des revendications précédentes, dans lequel le film a une épaisseur de 20 à 150 µm après étirage.

9. Procédé de préparation d'un film selon l'une quelconque des revendications précédentes, comprenant les étapes consistant à :
(i) mélanger un polyéthylène linéaire multimodal de faible densité a) et un polyéthylène tubulaire ou autoclave de faible densité b) dans les quantités souhaitées en % en poids afin d'obtenir un mélange,
(ii) convertir le mélange en un film soufflé sur une ligne de film soufflé, et
(iii) étirer ensuite le film soufflé avec un rapport d'étirage en dessous de 1:4 en ligne ou hors ligne.

10. Utilisation d'un film selon l'une quelconque des revendications précédentes 1 à 8 dans le domaine de l'emballage.

11. Utilisation selon la revendication 10 pour sacs d'épicerie, chemises de boîtes pour collectivités et consommateurs, sacs de marchandise, sacs d'expédition, films d'emballage alimentaire, chemises de sacs à parois multiples, sacs de fabrication, films rétractables, films d'étiquettes, emballages de charcuterie, suremballage de tissus et emballages rétractables.
